# FASCICULE DE BREVET EUROPEEN

(11) **EP 1 235 504 B1**
(45) Date de publication et mention de la délivrance du brevet: **15.10.2003**
(21) Numéro de dépôt: 00985343.3
(22) Date de dépôt: 28.11.2000
(51) Int. Cl.: A47J 27/08

(54) **DISPOSITIF DE SECURITE A LA SURPRESSION PAR FLUAGE DU JOINT POUR UN AUTOCUISEUR A TROU D'HOMME**
ÜBERDRUCKSICHERUNG FÜR EINEN DAMPFDRUCKKOCHER MIT EINER MANNLOCHÖFFNUNG
SAFETY DEVICE AGAINST EXCESS PRESSURE BY JOINT CREEP FOR PRESSURE COOKER WITH MANHOLE-TYPE LID

(30) Priorité: 30.11.1999 FR 9915037
(43) Date de publication de la demande: 04.09.2002
(73) Titulaire: Seb S.A., 69132 Ecully Cedex (FR)
(72) Inventeur: MANCHON, Didier, Louis, Auguste, F-73100 AIX LES BAINS (FR); GINDA, Carine, F-70100 Arc les Gray (FR)
(74) Mandataire: Martin, Didier Roland Valéry
(86) Numéro de dépôt international: FR0003320
(87) Numéro de publication internationale: WO01039643

(56) Documents cités:
- FR-A- 632 268
- US-A- 2 552 642
- US-A- 4 592 479
- US-A- 5 641 085

## Description

### DOMAINE TECHNIQUE

La présente invention se rapporte au domaine technique des dispositifs de sécurité à la surpression pour autocuiseurs à trou d'homme, par rupture de l'étanchéité procurée par le joint de l'autocuiseur, de tels dispositifs étant conçus pour éviter la projection violente de vapeur et/ou la destruction complète de l'appareil de cuisson en cas de surpression.

La présente invention concerne un dispositif de sécurité à la surpression pour un autocuiseur à trou d'homme comprenant une cuve de cuisson avec une ouverture ovalisée délimitée par un rebord rentrant, ouverture dans laquelle est susceptible d'être inséré un couvercle ovalisé définissant un petit diamètre et un grand diamètre, pour fermer hermétiquement la cuve par l'intermédiaire d'un joint d'étanchéité monté dans une rainure sensiblement périphérique du couvercle formant un bord roulé définissant une face interne et une face externe, ledit joint venant ainsi en appui étanche contre le rebord rentrant.

La présente invention concerne également un joint d'étanchéité destiné à être monté sur un autocuiseur à trou d'homme conforme à l'invention.

### TECHNIQUE ANTERIEURE

Les autocuiseurs dits " à trou d'homme " ou encore à couvercle rentrant, sont largement connus et présentent un certain nombre d'avantages et notamment ceux relatifs à leur simplicité d'économie de fabrication conduisant à la réalisation de produits particulièrement simples et bon marché.

Les autocuiseurs à trou d'homme sont, comme cela est bien connu de l'homme du métier, des autocuiseurs dont la cuve et le couvercle présentent une forme légèrement ovalisée permettant au couvercle d'être inséré à l'intérieur de la cuve pour venir occuper, par l'intermédiaire d'un joint d'étanchéité, et après rotation et mise en place du couvercle dans la cuve, une position de fermeture étanche dans laquelle le bord roulé du couvercle est à l'intérieur de la cuve, le joint d'étanchéité étant interposé entre le bord roulé et le bord rentrant périphérique de la cuve.

Il est déjà connu d'équiper les autocuiseurs à trou d'homme de dispositifs de sécurité à la surpression, les dispositifs de sécurité à la surpression les plus connus et les plus utilisés parmi ces derniers étant généralement constitués d'une sécurité fusible ou un joint, voir US-A-2 552 642 et US-A-5 641 085.

Il s'agit généralement d'une pièce ou pastille en matériau thermoplastique fixée sur le couvercle, par exemple par vissage. En cas d'élévation anormale de température et de surpression, la pastille, ou la pièce en matériau thermoplastique est amenée à fondre puis à s'éjecter du couvercle, permettant ainsi à la surpression de s'échapper. Les pièces en matériau thermoplastique peuvent être remplacées par des sécurités fusibles réalisées à partir de pièces métalliques facilement fusibles.

Les systèmes connus à ce jour mettant en oeuvre une sécurité fusible ne remplissent pas de manière parfaite la fonction de sécurité qui leur est dévolue et souffrent de certains inconvénients. En particulier, on a pu constater que lors de l'éjection de la pastille, les projections de vapeur restaient relativement importantes, et potentiellement dangereuses en raison de la rapidité de déclenchement du fusible et de l'absence de protection au niveau de la partie supérieure de l'autocuiseur.

Par ailleurs, il s'avère que le niveau de déclenchement thermique et de pression des fusibles est excessivement variable ce qui réduit l'efficacité et la sécurité de tels dispositifs.

En outre, il a également pu être constaté que la pression de déclenchement de ces sécurités était généralement relativement basse, ce qui nuisait à leur efficacité, certains utilisateurs ayant alors tendance, en constatant le déclenchement systématique de ces sécurités lors de chauffes à sec non intentionnelles, à éliminer définitivement ces sécurités en remplaçant le fusible par un clou ou une pièce métallique, aboutissant à un appareil dépourvu de dispositif de sécurité.

En l'absence de tout système de sécurité, les autocuiseurs à trou d'homme s'avèrent en conséquence extrêmement dangereux puisqu'en cas de surpression, de tels appareils de cuisson sont détruits par explosion, ce qui les rend excessivement dangereux alors même qu'en raison de leur faible coût, ils sont extrêmement répandus dans certaines régions du monde.

Dans la demande de brevet français antérieure du même demandeur, FR 9909758, non encore publiée, dont l'ensemble de la description est incorporée intégralement dans la présente demande, il a déjà été envisagé de réaliser un dispositif de sécurité pour autocuiseur à trou d'homme mettant en oeuvre des moyens permettant un défaut d'étanchéité du joint en cas de surpression. La présente demande de brevet constitue une évolution technique de cette demande antérieure non encore publiée.

### EXPOSE DE L'INVENTION

Les objets assignés à l'invention visent en conséquence à porter remède aux différents inconvénients énumérés précédemment et à proposer un nouveau dispositif de sécurité à la surpression pour un autocuiseur à trou d'homme qui permet une bonne maîtrise et une bonne répétitivité du déplacement du joint responsable de l'étanchéité tout en évitant la destruction de l'appareil en cas de surpression.

Un autre objet de l'invention vise à proposer un nouveau dispositif de sécurité à la surpression qui permette d'obtenir une déformation du joint et une rupture locale de l'étanchéité à l'aide de moyens particulièrement simples et fiables.

Un autre objet de l'invention vise à proposer un nouveau dispositif de sécurité à la surpression possédant une sécurité renforcée mettant en oeuvre un second niveau de sécurité susceptible d'intervenir en cas de non fonctionnement du premier niveau de sécurité.

Un autre objet de l'invention vise à proposer un nouveau dispositif de sécurité à la surpression présentant une excellente efficacité en matière de sécurité tout en étant de conception particulièrement simple.

Un autre objet de l'invention vise à proposer un nouveau dispositif de sécurité évitant tout risque de mauvaise manipulation, modification ou mauvais montage des éléments le composant.

Les objets assignés à l'invention sont atteints à l'aide d'un dispositif de sécurité à la surpression pour un autocuiseur à trou d'homme comprenant une cuve de cuisson, avec une ouverture ovalisée délimitée par un rebord rentrant dans laquelle est susceptible d'être inséré un couvercle ovalisé, définissant un petit diamètre et un grand diamètre, pour fermer hermétiquement la cuve par l'intermédiaire d'un joint d'étanchéité, monté dans une rainure sensiblement périphérique du couvercle formant un bord roulé et définissant une face interne et une face externe, ledit joint venant ainsi en appui étanche contre le rebord rentrant caractérisé en ce que sensiblement dans la zone correspondant au grand diamètre du couvercle, la rainure comporte des moyens de fluage du joint, et en ce que le joint, le rebord rentrant et le couvercle sont conformés pour qu'en cas de surpression, le couvercle étant en position de butée contre le rebord rentrant par la périphérie du bord roulé, le joint flue localement par les moyens de fluage, de manière centripète sous l'effet de la pression agissant à travers les moyens de fluage pour rompre localement l'étanchéité et laisser la vapeur s'échapper entre le rebord rentrant et le couvercle.

### DESCRIPTIF SOMMAIRE DES DESSINS

Les objets assignés à l'invention seront explicités plus en détail à la lecture de la description qui suit, à l'aide des dessins annexés ci-après, donnés à titre purement illustratifs et non limitatifs, dans lesquels :
- La figure 1 représente selon une vue en perspective, une vue générale d'un autocuiseur à trou d'homme conforme à l'invention.
- La figure 2 représente selon une vue en coupe transversale, une vue générale d'un autocuiseur à trou d'homme conforme à l'invention.
- La figure 3 représente selon une vue en perspective, un détail de réalisation du couvercle d'un autocuiseur à trou d'homme conforme à l'invention.
- La figure 4 illustre selon une vue en perspective, un couvercle d'autocuiseur à trou d'homme conforme à l'invention comportant un joint d'étanchéité conforme à l'invention.
- La figure 5 illustre selon une vue générale en perspective, un joint d'étanchéité conforme à l'invention.
- Les figures 6 et 7 illustrent, selon des vues en coupes partielles, le principe général de déplacement d'un joint selon l'invention.
- La figure 8 illustre, selon une vue de dessus, une variante préférentielle d'un joint conforme à l'invention.

### MEILLEURE MANIERE DE REALISER L'INVENTION

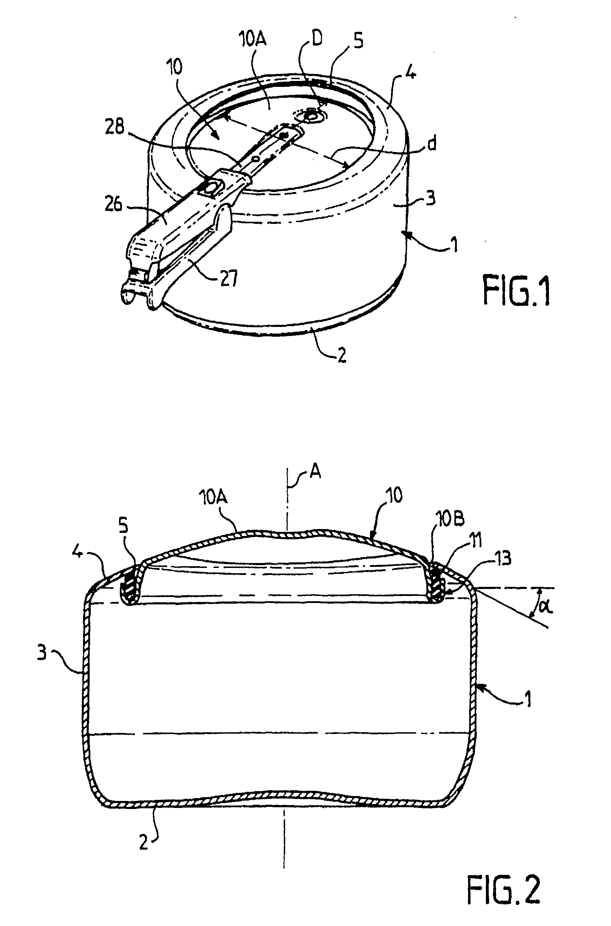

La figure 1 illustre de manière générale un autocuiseur à trou d'homme comprenant une cuve de cuisson 1 réalisée en matériau métallique, avec un fond 2 à partir duquel s'élèvent les parois 3, sensiblement verticales, de la cuve, ces dernières étant surmontées par un bord rentrant 4 s'étendant sur toute la périphérie de la cuve 1.

L'ouverture de la cuve, de forme sensiblement ovale ou ovalisée, est délimitée par le bord terminal 5 du rebord rentrant 4.

Tel que cela est bien connu de l'homme de l'art, on entend au sens de l'invention par rebord rentrant 4, la partie terminale supérieure annulaire de la cuve 1 dirigée vers l'axe de symétrie S de la cuve quelle que soit la valeur angulaire du rebord rentrant 4 par rapport à un plan horizontal, le rebord rentrant 4 surplombant en conséquence une partie du fond 2.

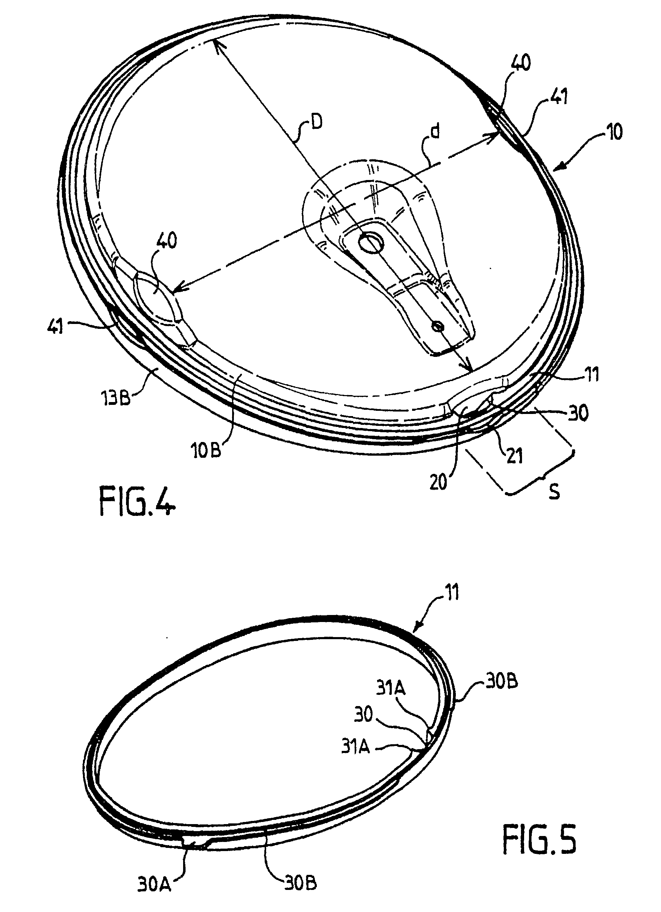

L'autocuiseur à trou d'homme conforme à l'invention comprend également un couvercle 10 (figure 4), de forme également sensiblement ovale avec une partie centrale 10A bombée et un flanc torique 10B, le couvercle 10 étant destiné à être inséré dans l'ouverture de la cuve de cuisson 1 pour venir fermer hermétiquement cette dernière par l'intermédiaire d'un joint d'étanchéité 11 monté dans une rainure 12 sensiblement périphérique dudit couvercle 10, ladite rainure étant formée par un bord roulé 13.

Grâce à cette disposition, le joint 11 étant placé en appui au fond de la rainure 12, le couvercle 10 peut être inséré dans l'ouverture de la cuve 1 à sa périphérie externe, par l'intermédiaire d'une poignée 26, en l'inclinant légèrement et en l'insérant par la plus grande ouverture de la cuve, puis en faisant ensuite coïncider l'ovale du couvercle 10 avec l'ovale de la cuve 1 par rotation sur une valeur angulaire d'environ 90 degrés. Dans la position de fermeture illustrée à la figure 2, le couvercle 10 est maintenu contre le rebord rentrant 4 par l'intermédiaire de la partie supérieure du joint 11 qui vient en appui étanche contre le bord rentrant 4 grâce à la mise en appui d'une poignée de cuve 27 et de la poignée de couvercle 26. Tel qu'illustré à la figure 1, la poignée de couvercle 26 est fixée par une tige 28 sur le couvercle 10 selon un rayon correspondant au grand diamètre D du couvercle 10.

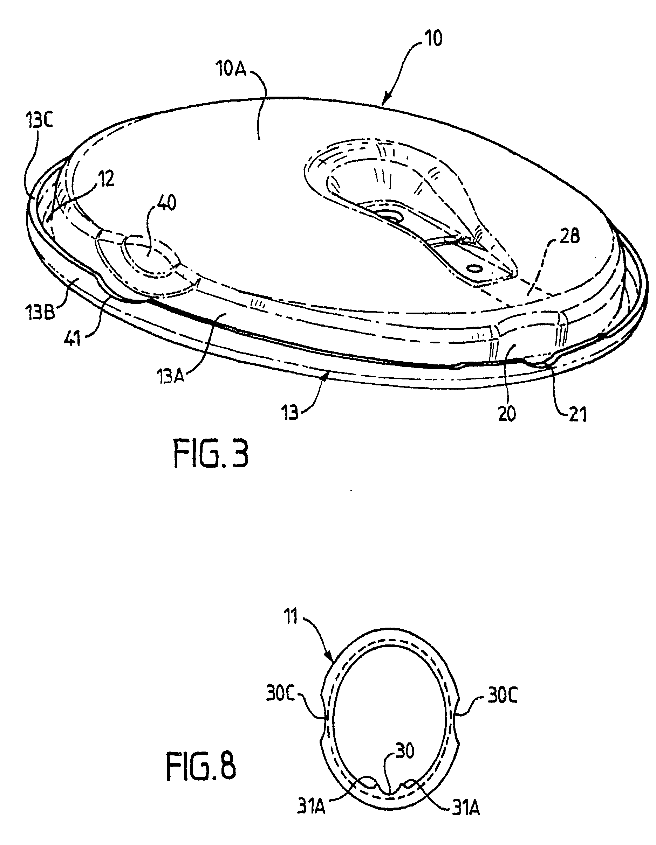

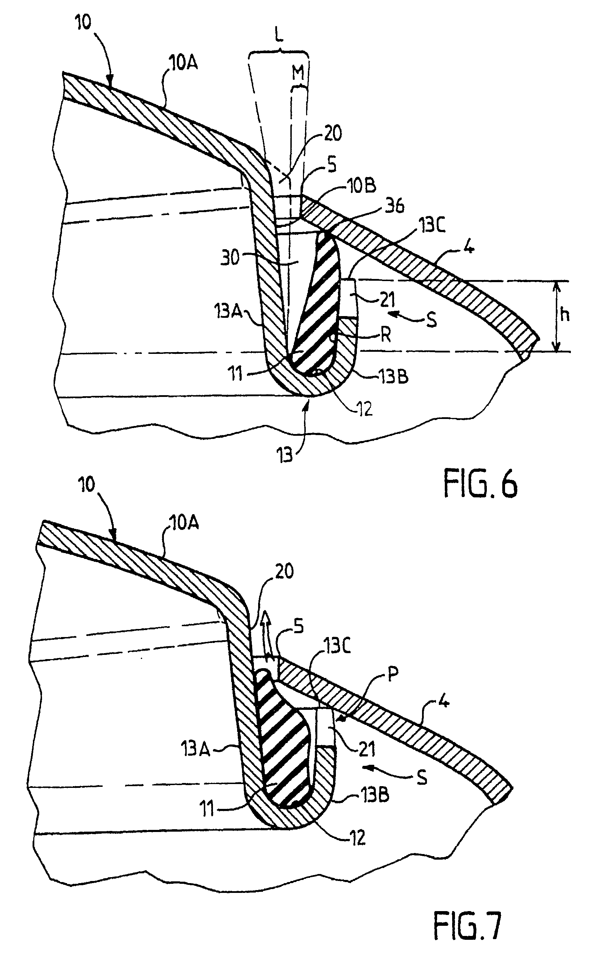

Tel que cela est particulièrement visible aux figures 6 et 7, la rainure 12 délimitée extérieurement par le bord roulé 13 comprend une face interne 13A et une face externe 13B formant le bord roulé proprement dit qui est destiné à venir en appui contre la face interne du bord rentrant 4 par son extrémité supérieure 13C tel qu'illustré à la figure 3, en cas de surpression. Dans la position de butée illustrée à la figure 7, le bord roulé 13, suivant sa configuration géométrique, vient en butée sur un ou plusieurs secteur(s) angulaire(s) défini(s) par la surface de l'extrémité supérieure 13C.

Selon l'invention, le joint 11 et le rebord rentrant 4 sont conformés, pour qu'en cas de surpression, le couvercle 10 vienne en position de butée contre le rebord rentrant 4 par un ou plusieurs secteur(s) de la périphérie du bord roulé 13, 13B défini(s) par la surface de l'extrémité supérieure 13C tout en laissant le joint 11 se déformer localement en direction sensiblement centripète, en considération de l'axe de symétrie A de la cuve de cuisson 1, sous l'effet de la pression agissant à travers une ou des zone(s) de dégagement ménagée(s) hors du ou des secteur(s) de contact de manière à rompre localement l'étanchéité et laisser la pression s'échapper entre le rebord rentrant 4, c'est à dire entre le bord terminal 5, et le couvercle 10.

Selon l'invention, la notion de " surpression " s'entend d'un état de pression interne à l'autocuiseur, supérieur à la pression normale de fonctionnement, et par exemple supérieur à 0,9 bars.

Avantageusement, selon une caractéristique importante de l'invention, le dispositif de sécurité conforme à l'invention comporte des moyens de fluage du joint 11 situés et réalisés dans ou au niveau de la rainure 12 selon une position géométrique spécifique sensiblement dans la zone S correspondant au grand diamètre D du couvercle. La rainure 12 comporte alors, en tant que moyen de fluage, une déformation 20 dans sa face interne 13A, et une encoche 21 ou un orifice dans sa face externe 13B. En outre, tel que mentionné précédemment, le joint 11, le rebord rentrant 4 et le couvercle 10 sont conformés pour qu'en cas de surpression, le couvercle 10 étant en position de butée contre le rebord rentrant 4 par la périphérie du bord roulé 13, 13B, le joint 11 flue localement par la déformation 20 de manière centripète sous l'effet de la pression agissant à travers l'encoche 21 ou l'orifice pour rompre localement l'étanchéité et laisser la vapeur s'échapper entre le rebord rentrant 4 et le couvercle 10.

Le fait de réaliser la zone de dégagement du joint 11 dans la zone S correspondant au grand diamètre du couvercle 10 présente l'avantage de réduire et limiter les dispersions dimensionnelles. En effet, c'est au niveau du grand diamètre D du couvercle 10 que le mouvement relatif du couvercle 10 par rapport à la cuve 1 est minimal, ce qui permet dans le cas présent de bénéficier d'une précision et d'une sécurité maximales quant au positionnement du joint 11 au niveau de la zone S. Cette maîtrise du positionnement du joint 11 relativement à la cuve 1 et au couvercle 10 permet de définir une zone de déformation élastique du joint 11 autorisant précisément son fluage sans destruction de l'appareil.

En effet, la réalisation d'une encoche 21, de préférence en forme d'arc de cercle, permet de dégager une partie de la surface latérale du joint 11 permettant ainsi à la pression P de s'exercer directement sur le joint 11 de manière sensiblement centripète tel que cela est visible à la figure 6, pour rompre localement l'étanchéité.

Bien évidemment, on s'efforcera de faciliter le déplacement ou la déformation centripète du joint 11 en veillant à créer un espace suffisant pour son déplacement au niveau de l'interface entre le flanc 10B du couvercle 10 et le bord terminal 5 du bord rentrant 4.

La déformation 20, sera avantageusement ménagée de manière symétrique relativement à l'encoche 21 et alignée radialement avec cette dernière. La déformation 20 pourra être obtenue de manière particulièrement simple par emboutissage lors de l'opération de formage du couvercle 10. D'autres formes et manières d'obtenir une déformation locale du couvercle sont bien évidemment envisageables dès l'instant que l'on parvient à obtenir une rupture locale de forme générale du flanc 10B situé au droit ou en alignement radial avec l'encoche 21 permettant une augmentation de l'espace de chute du joint 11 en direction centripète.

Avantageusement, tel que cela est particulièrement visible aux figures, la déformation 20 sera formée par un contre définissant une face sensiblement concave.

Avantageusement, pour améliorer la maîtrise de la déformation élastique par fluage du joint 11, ce dernier comportera une zone de section affaiblie 30 (figure 5) destinée à être située en regard de la déformation 20 pour favoriser le fluage local du dit joint.

Avantageusement, tel qu'illustrée en particulier à la figure 5, la zone de section affaiblie 30 sera formée par un évidement, de forme régulière ou non, et par exemple sensiblement concave, ménagé de préférence à partir de la face interne du joint 11. Avantageusement, l'évidement est incliné, sa partie supérieure étant au repos, plus éloignée de la face interne de la rainure 12 que sa partie inférieure.

L'évidement 30 peut être ménagé sur toute la hauteur du joint ou sur une partie seulement à partir de sa face supérieure.

La réalisation de moyens de fluage du joint 11 sous la forme d'une déformation 20 et d'une encoche 21 ou orifice dans la zone S permet de constituer des moyens techniques réalisant un premier niveau de sécurité de surpression, le fluage du joint 11 intervenant dans une zone de pression correspondant à 1,4 à 3 bars environ. Il doit également être noté que les moyens de fluage sont situés au droit et sous la poignée de couvercle 26, ce qui diminue les risques de projection de vapeur directement vers le haut de l'autocuiseur et donc vers l'utilisateur.

Selon l'invention, il est également envisageable de réaliser dans le dispositif conforme à l'invention un niveau de sécurité supplémentaire survenant à un niveau de pression supérieur à la pression de fluage du joint 11. Ce second niveau de sécurité est destiné à pallier un éventuel dysfonctionnement du fluage du joint.

Ainsi, conformément à l'invention, le dispositif conforme à l'invention comprend, dans au moins une zone différente de la zone S correspondant au grand diamètre du couvercle 10 des moyens d'extrusion du joint réalisés à partir ou dans la rainure 12 et comprenant une rupture de forme 40 dans sa face interne 13A et une entaille 41 ou orifice dans sa face externe 13B (figure 3 par exemple).

Ces moyens d'extrusion permettent l'extrusion du joint 11 hors de la rainure 12 sous l'effet de la pression agissant à travers l'entaille 41 ou l'orifice considéré, l'extrusion du joint survenant à une valeur de pression supérieure à la valeur de pression à laquelle a lieu le fluage du joint. Dans un tel cas, l'extrusion du joint 11 hors de la rainure 12 s'accompagne d'une déformation du rebord rentrant 4 et de l'ensemble de l'autocuiseur de telle sorte qu'il n'est plus réutilisable par la suite.

Selon une version particulièrement avantageuse de l'invention, tel qu'illustré à la figure 4, le dispositif de sécurité conforme à l'invention comporte une paire de moyens d'extrusion 40, 41 ménagés en opposition dans la rainure 12 sensiblement dans la zone correspondant au petit diamètre d du couvercle 10. On obtient ainsi la création de deux zones d'extrusion diamétralement opposées renforçant la sécurité de l'appareil.

Avantageusement, la rupture de forme 40 est formée par un contre définissant une face sensiblement concave dans le flanc 10B du couvercle 10 au niveau du joint 11 lorsqu'il est en position dans la rainure 12. Avantageusement, la rupture de forme 40 peut être ménagée dans le couvercle 10 au niveau du joint et/ou au-dessus du niveau supérieur du joint 11 lorsque ce dernier est en position dans la rainure 12. De manière générale, on s'efforcera de veiller à réaliser une inclinaison générale des lignes génératrices de la rupture de forme 40 dirigée vers l'axe de symétrie S de l'appareil. De cette façon, tout ou partie des jets de vapeur susceptibles de s'échapper lors de l'extrusion du joint seront préférentiellement dirigés vers une zone centrale et vers le haut de l'autocuiseur évitant que le jet de vapeur surchauffé ne soit directement dirigé vers l'utilisateur.

Selon une variante préférentielle de l'invention, la position du joint 11 est indexée relativement à la rainure 12 par des moyens d'indexation de position. De manière avantageuse, les moyens d'indexation comprennent au moins une surépaisseur locale 30A (figure 5) s'étendant sensiblement radialement à la périphérie externe du joint 11, ladite surépaisseur étant de forme conjuguée à la forme de l'entaille 41 pour venir s'intégrer et reposer sur cette dernière et réaliser l'indexation du joint. Une telle particularité permet de faciliter le positionnement correct du joint dans la rainure 12 et principalement d'éviter un positionnement inversé. La surépaisseur 30A peut être réalisée et intégrée dans une lèvre périphérique 30B destinée à venir reposer sur l'extrémité 13C.

De préférence, le joint 11 comportera deux sur-épaisseurs locales 30A, diamétralement opposées pour venir s'intégrer dans chaque entaille 41. Selon une variante de réalisation (figure 8), les moyens d'indexation pourront être associés aux moyens de fluage 20, 21, le joint 11 pouvant comporter une ou plusieurs sur-épaisseurs 31A située(s) localement à la périphérie interne du joint 11 au niveau de la zone affaiblie 30 et par exemple aux extrémités de l'évidement. Selon cette variante, les sur-épaisseurs 31A sont associées à des encoches concaves 30C formées dans la face externe du joint, par exemple au niveau du joint correspondant au petit diamètre d, et destinées à venir coopérer avec des formes complémentaires du couvercle 10.

L'extrusion du joint par l'intermédiaire des moyens d'extrusion 40, 41 intervient à une valeur de pression sensiblement voisine de 4,5 à 5 bars.

Le fonctionnement du dispositif de sécurité conforme à l'invention est le suivant.

En position normale de fonctionnement, le joint 11 assure l'étanchéité de l'autocuiseur à trou d'homme, en évitant tout passage de pression de l'intérieur de la cuve 1 vers l'extérieur de l'autocuiseur. En cas de surpression anormale, et dans la mesure où les autres dispositifs de sécurité annexes de l'autocuiseur (valve de surpression par exemple) n'ont pas fonctionnés au préalable, le couvercle 10 vient en contact par l'intermédiaire de l'extrémité supérieure 13C du bord roulé 13B avec la face interne du bord rentrant 4. Une telle situation intervient en général vers une zone de surpression voisine de 1,4 à 1,7 bars environ.

Dans cette situation, le premier niveau de sécurité du dispositif de sécurité à la surpression conforme à l'invention, formé par les moyens de fluage 20, 21, peut être mis en oeuvre. Ainsi, la pression P peut pousser le joint 11 en direction centripète au niveau de la zone S permettant alors le fluage du joint, c'est-à-dire sa déformation élastique centripète permettant de rompre localement l'étanchéité et de laisser la vapeur s'échapper au niveau de la zone S, située sous la poignée 26.

Si pour des raisons diverses, tel qu'encrassement ou blocage du joint, mauvais positionnement ou autres, le fluage du joint ne peut être obtenu, la pression interne continue d'augmenter jusqu'à ce que les moyens d'extrusion 40, 41 soient sollicités. Dans cette situation, la pression assure l'extrusion du joint hors de la rainure 12 par l'intermédiaire des ruptures de forme 40 et des entailles 41. L'extrusion du joint 12 s'accompagne d'une déformation du couvercle avec rupture locale de l'étanchéité.

En définitive, le dispositif de sécurité à la surpression conforme à l'invention permet d'obtenir un autocuiseur à trou d'homme comportant les moyens nécessaires pour maîtriser parfaitement la rupture locale de l'étanchéité du joint, et ce selon deux niveaux différenciés de pression. Ceci constitue une garantie supplémentaire de sécurité pour l'utilisateur.

### POSSIBILITE D'APPLICATION INDUSTRIELLE

L'invention trouve son application industrielle dans la fabrication d'autocuiseurs à trou d'homme et dans la fabrication de joints de sécurité destinés à être montés et utilisés dans de tels autocuiseurs.

## Revendications

1. Autocuiseur à trou d'homme avec un dispositif de sécurité à la surpression comprenant une cuve (1) de cuisson, avec une ouverture ovalisée délimitée par un rebord rentrant (4) dans laquelle est susceptible d'être inséré un couvercle ovalisé (10), définissant un petit diamètre (d) et un grand diamètre (D), pour fermer hermétiquement la cuve (1 ) par l'intermédiaire d'un joint d'étanchéité (11 ), monté dans une rainure (12) sensiblement périphérique du couvercle (10) formant un bord roulé (13) et définissant une face interne (13A) et une face externe (138), ledit joint venant ainsi en appui étanche contre le rebord rentrant (4) **caractérisé en ce que** sensiblement dans la zone (S) correspondant au grand diamètre (D) du couvercle (10), la rainure (12) comporte des moyens de fluage (20, 21) du joint (11), et **en ce que** le joint (11), le rebord rentrant (4) et le couvercle (10) sont conformés pour qu'en cas de surpression, le couvercle (10) étant en position de butée contre le rebord rentrant (4) par la périphérie du bord roulé (13), le joint (11) flue localement par les moyens de fluage (20, 21) de manière centripète sous l'effet de la pression agissant à travers les moyens de fluage pour rompre localement l'étanchéité et laisser la vapeur s'échapper entre le rebord rentrant (4) et le couvercle (10).

2. Autocuiseur selon la revendication 1 **caractérisé en ce que** les moyens de fluage sont formés dans la rainure (12) par :
- une déformation (20) dans la face interne (13A),
- une encoche ou orifice dans sa face externe (13B).

3. Autocuiseur selon la revendication 2 **caractérisé en ce que** la déformation (20) est formée par un contre définissant une face sensiblement concave.

4. Autocuiseur selon l'une des revendications 1 à 3 **caractérisé en ce que** le joint (11) comporte une zone de section affaiblie (30) au niveau de la déformation (20) pour favoriser le fluage local du joint.

5. Autocuiseur selon la revendication 4 **caractérisé en ce que** la zone de section affaiblie (30) est formée par un évidement ménagé à partir de la face interne du joint (11).

6. Autocuiseur selon l'une des revendications 1 à 5 **caractérisé en ce qu'**au moins dans une zone différente du grand diamètre (D) du couvercle (10), la rainure (12) comporte des moyens d'extrusion (40, 41 ), de manière à permettre l'extrusion du joint hors de la rainure (12) sous l'effet de la pression agissant à travers les moyens d'extrusion (40, 41), l'extrusion du joint (11) survenant à une valeur de pression supérieure à la valeur de pression à laquelle a lieu le fluage du joint.

7. Autocuiseur selon la revendication 6 **caractérisé en ce que** les moyens d'extrusion de la rainure (12) comprennent :
- une rupture de forme (40) dans sa face interne (13A),
- une entaille (41) ou orifice dans sa face externe.

8. Autocuiseur selon la revendication 6 ou 7 **caractérisé en ce qu'**il comporte une paire de moyens d'extrusion (40, 41 ) ménagés en opposition dans la rainure (12) sensiblement dans la zone correspondant au petit diamètre (d) du couvercle.

9. Autocuiseur selon la revendication 7 **caractérisé en ce que** la rupture de forme (40) est formée par un contre définissant une face sensiblement concave ménagé au niveau du joint (11).

10. Autocuiseur selon l'une des revendications 6 à 9 **caractérisé en ce que** la rupture de forme (40) est ménagée dans le couvercle (10) au niveau du joint (11) et/ou au-dessus du niveau supérieur du joint (11) lorsque ce dernier est en position dans la rainure (12).

11. Autocuiseur selon l'une des revendications précédentes **caractérisé en ce que** la position du joint (11) est indexée relativement à la rainure (12) par des moyens d'indexation de position.

12. Autocuiseur selon la revendication 9 **caractérisé en ce que** les moyens d'indexation comprennent au moins une surépaisseur locale (30A) s'étendant à la périphérie externe du joint (11), de forme conjuguée à l'entaille (41), pour venir s'intégrer dans cette dernière.

13. Autocuiseur selon la revendication 11 **caractérisé en ce que** les moyens d'indexation sont associés aux moyens de fluage (20, 21).

14. Autocuiseur selon la revendication 13 **caractérisé en ce que** les moyens d'indexation comportent une ou plusieurs sur-épaisseurs (31A) situées localement à la périphérie interne du joint (11) au niveau de la zone affaiblie (30).

15. Joint d'étanchéité (11 ) destiné à être monté et utilisé dans un autocuiseur à trou d'homme comprenant une cuve (1) de cuisson, avec une ouverture ovalisée délimitée par un rebord rentrant (4) dans laquelle est susceptible d'être inséré un couvercle ovalisé (10), définissant un petit diamètre (d) et un grand diamètre (D), pour fermer hermétiquement la cuve (1) par l'intermédiaire du joint d'étanchéité (11 ), monté dans une rainure (12) sensiblement périphérique du couvercle (10) formant un bord roulé (13) et définissant une face interne (13A) et une face externe (13B), ledit joint venant ainsi en appui étanche contre le rebord rentrant (4) **caractérisé en ce que** sensiblement dans la zone (S) correspondant au grand diamètre (D) du couvercle (10), la rainure (12) comporte des moyens de fluage (20, 21) du joint (11), et **en ce que** le joint (11 ), le rebord rentrant (4) et le couvercle (10) sont conformés pour qu'en cas de surpression, le couvercle (10) étant en position de butée contre le rebord rentrant (4) par la périphérie du bord roulé (13), le joint (11) flue localement par les moyens de fluage (20, 21) de manière centripète sous l'effet de la pression agissant à travers les moyens de fluage pour rompre localement l'étanchéité et laisser la vapeur s'échapper entre le rebord rentrant (4) et le couvercle (10).

## Patentansprüche

1. Dampfdruckkocher mit einer Mannlochöffnung und einer Überdrucksicherung mit einem Kochbehälter (1) mit einer ovalen Öffnung, die begrenzt ist von einem nach innen gerichteten Rand (4), in den ein ovaler Deckel (10) einsetzbar ist, der einen kleinen Durchmesser (d) und einen großen Durchmesser (D) aufweist zum hermetischen Verschluss des Behälters (1) mittels einer Dichtung (11), die in einer Rille (12) montiert ist, die im wesentlichen entlang des Umfangs des Deckels vorgesehen ist, einen gerollten Rand (13) aufweist und eine innere Fläche (13A) und eine äußere Fläche (13B) bildet, wobei die Dichtung so in dichte Anlage kommt gegen den nach innen gerichteten Rand (4), **dadurch gekennzeichnet, dass** die Rille (12) im wesentlichen in dem Bereich (S), der dem großen Durchmesser (D) des Deckels (10) entspricht, Fließmittel (20, 21) der Dichtung (11) aufweist, dass die Dichtung (11), der nach innen gerichtete Rand (4) und der Deckel (10) angepasst sind, dass im Fall von Überdruck, bei dem sich der Deckel (10) in der Position der Anlage gegen den nach innen gerichteten Rand (4) über den Umfang des gerollten Rands (13) befindet, die Dichtung (11) örtlich fließt mittels Fließmitteln (20, 21) auf zentripetale Weise unter dem Einfluss des Drucks, der über die Fließmittel wirkt um örtlich die Dichtung zu durchbrechen und den Dampf austreten zu lassen zwischen dem nach innen gerichteten Rand (4) und dem Deckel (10).

2. Dampfdruckkocher gemäß Anspruch 1, **dadurch gekennzeichnet, dass** die Fließmittel in der Rille (12) gebildet sind durch:
- eine Verformung (20) in der inneren Fläche (13A),
- eine Einkerbung oder Öffnung in ihrer äußeren Fläche (13B).

3. Dampfdruckkocher gemäß Anspruch 2, **dadurch gekennzeichnet, dass** die Verformung (20) gebildet ist durch eine Vertiefung, die eine im wesentlichen konkave Fläche bildet.

4. Dampfdruckkocher gemäß einem der Ansprüche 1 bis 3, **dadurch gekennzeichnet, dass** die Dichtung (11) einen geschwächten Querschnittsbereich (30) auf der Ebene der Verformung (20) aufweist, um das örtliche Fließen der Dichtung zu begünstigen.

5. Dampfdruckkocher gemäß Anspruch 4, **dadurch gekennzeichnet, dass** der geschwächte Querschnittsbereich (30) gebildet ist aus einer Höhlung, die untergebracht ist von der inneren Fläche der Dichtung (11).

6. Dampfdruckkocher gemäß einem der Ansprüche 1 bis 5, **dadurch gekennzeichnet, dass** mindestens in einem unterschiedlichen Bereich vom großen Durchmesser (D) des Deckels (10), die Rille (12) Extrusionsmittel (40, 41) aufweist, so dass die Extrusion der Dichtung aus der Rille (12) möglich ist unter der Wirkung des Drucks, der über die Extrusionsmittel (40, 41) wirkt, wobei die Extrusion der Dichtung (11) eintritt bei einem Wert des Drucks, der höher ist als der Wert des Drucks, bei dem das Fließen der Dichtung auftritt.

7. Dampfdruckkocher gemäß Anspruch 8, **dadurch gekennzeichnet, dass** die Extrusionsmittel der Rinne (12) aufweisen:
- eine Unterbrechung der Form (40) an seiner inneren Fläche (13A),
- einen Einschnitt (41) oder Öffnung an seiner äußeren Fläche.

8. Dampfdruckkocher gemäß einem der Ansprüche 6 oder 7, **dadurch gekennzeichnet, dass** ein Paar Extrusionsmittel (40, 41) vorgesehen sind, die gegenüber der Rinne (12) im wesentlichen in dem Bereich untergebracht sind, der dem kleinen Durchmesser (d) des Deckels entspricht.

9. Dampfdruckkocher gemäß Anspruch 7, **dadurch gekennzeichnet, dass** die Unterbrechung der Form (40) gebildet ist durch eine Vertiefung, die eine im wesentlichen konkave Fläche bildet, die auf dem Niveau der Dichtung (11) untergebracht ist.

10. Dampfdruckkocher gemäß einem der Ansprüche 6 bis 9, **dadurch gekennzeichnet, dass** die Unterbrechung der Form (40) untergebracht ist im Deckel (10) auf dem Niveau der Dichtung (11), wenn die letztere sich in der Rinne (12) befindet.

11. Dampfdruckkocher gemäß einem der vorhergehenden Ansprüche, **dadurch gekennzeichnet, dass** die Position der Dichtung (11) bezogen ist relativ zur Rinne (12) mit Mitteln zur Bezeichnung der Position.

12. Dampfdruckkocher gemäß Anspruch 9, **dadurch gekennzeichnet, dass** die Mittel zur Bezeichnung der Position mindestens eine örtliche Verdickung (30A) aufweisen, die sich an dem äußeren Umfang der Dichtung (11) erstrecken mit einer komplementären Form zum Einschnitt (41), um sich in diesen letzteren einpassen zu können.

13. Dampfdruckkocher gemäß Anspruch 11, **dadurch gekennzeichnet, dass** die Mittel zur Bezeichnung der Position verbunden sind mit den Fließmitteln (20, 21).

14. Dampfdruckkocher gemäß Anspruch 13, **dadurch gekennzeichnet, dass** die Mittel zur Bezeichnung der Position eine oder mehrere örtliche Verdickungen (31A) aufweisen, die örtlich an dem inneren Umfang der Dichtung (11) angeordnet sind auf dem Niveau des geschwächten Bereichs (30).

15. Dichtung (11), die in einem Dampfdruckkocher mit einer Mannlochöffnung montiert und benutzt werden soll mit einem Kochbehälter (1) mit einer ovalen Öffnung, die begrenzt ist von einem nach innen gerichteten Rand (4), in den ein ovaler Deckel (10) einsetzbar ist, der einen kleinen Durchmesser (d) und einen großen Durchmesser (D) aufweist zum hermetischen Verschluss des Behälters (1) mittels einer Dichtung (11), die in einer Rille (12) montiert ist, die im wesentlichen entlang des Umfangs des Deckels (10) vorgesehen ist, einen gerollten Rand (13) aufweist und eine innere Fläche (13A) und eine äußere Fläche (13B) bildet, wobei die Dichtung so in dichte Anlage kommt gegen den nach innen gerichteten Rand (4), **dadurch gekennzeichnet, dass** die Rille (12) im wesentlichen in dem Bereich (S), der dem großen Durchmesser (D) des Deckels (10) entspricht, Fließmittel (20, 21) der Dichtung (11) aufweist, dass die Dichtung (11), der nach innen gerichtete Rand (4) und der Deckel (10) angepasst sind, dass im Fall von Überdruck, bei dem sich der Deckel (10) in der Position der Anlage gegen den nach innen gerichteten Rand (4) über den Umfang des gerollten Rands (13) befindet, die Dichtung (11) örtlich fließt mittels Fließmitteln (20, 21) auf zentripetale Weise unter dem Einfluss des Drucks, der über die Fließmittel wirkt um örtlich die Dichtung zu durchbrechen und den Dampf austreten zu lassen zwischen dem nach innen gerichteten Rand (4) und dem Deckel (10).

## Claims

1. Pressure cooker with manhole with an overpressure safety device, comprising a cooking chamber (1), with an oval opening bordered by a re-entrant rim (4) in which an oval lid (10) is able to be inserted, defining a small diameter (d) and a large diameter (D), in order to hermetically close the chamber (1) by means of a sealing joint (11) which is mounted in a substantially peripheral groove (12) in the lid (10) forming a rolled edge (13) and defining an internal face (13A) and an external face (13B), the said joint thus coming into sealed abutment against the re-entrant rim (4), **characterised in that**, substantially in the area (S) corresponding to the large diameter (D) of the lid (10), the groove (12) comprises creep means (20, 21) for the joint (11), and **in that** the joint (11), the re-entrant rim (4) and the lid (10) are formed so that, in the event of overpressure, the lid (10) being in a position of abutment against the re-entrant rim (4) through the periphery of the rol led edge (13), the joint (11) creeps locally through the creep means (20, 21) in a centripetal manner under the effect of the pressure acting through the creep means in order to break the seal locally and allow the steam to escape between the re-entrant rim (4) and the lid (10).

2. Pressure cooker according to Claim 1, **characterised in that** the creep means are formed in the groove (12) by:
- a deformation (20) in the internal face (13A),
- a notch or orifice in its external face (13B).

3. Pressure cooker according to Claim 2, **characterised in that** the deformation (20) is formed by a recessed part defining a substantially concave face.

4. Pressure cooker according to one of Claims 1 to 3, **characterised in that** the joint (11) comprises an area with a weakened cross-section (30) at the deformation (20) in order to assist the local creep of the joint.

5. Pressure cooker according to Claim 4, **characterised in that** the area with a weakened cross-section (30) is formed by a recess provided as from the internal face of the joint (11).

6. Pressure cooker according to one of Claims 1 to 5, **characterised in that**, at least in a different area from the large diameter (D) of the lid (10), the groove (12) comprises extrusion means (40, 41), so as to allow the extrusion of the joint out of the groove (12) under the effect of the pressure acting through the extrusion means (40, 41), the extrusion of the joint (11) occurring at a pressure value higher than the pressure value at which the joint creep takes place.

7. Pressure cooker according to Claim 6, **characterised in that** the extrusion means of the groove (12) comprise:
- a break in shape (40) in its internal face (13A),
- a cut (41) or orifice in its external face.

8. Pressure cooker according to Claim 6 or 7, **characterised in that** it comprises a pair of extrusion means (40, 41) provided in opposition in the groove (12) substantially in the area corresponding to the small diameter (d) of the lid.

9. Pressure cooker according to Claim 7, **characterised in that** the break in shape (40) is formed by a recess part defining a substantially concave face provided at the joint (11).

10. Pressure cooker according to one of Claims 6 to 9, **characterised in that** the break in shape (40) is provided in the cover (10) at the joint (11) and/or above the top level of the joint (11) when the latter is in position in the groove (12).

11. Pressure cooker according to one of the preceding claims, **characterised in that** the position of the joint (11) is located relative to the groove (12) by position locating means.

12. Pressure cooker according to Claim 9, **characterised in that** the locating means comprise at least one local protrusion (30A) extending at the external periphery of the joint (11), with a shape conjugate to the cut (41), in order to fit in the latter.

13. Pressure cooker according to Claim 11, **characterised in that** the locating means are associated with the creep means (20, 21).

14. Pressure cooker according to Claim 13, **characterised in that** the locating means comprise one or more protrusions (31A) situated locally at the internal periphery of the joint (11) at the weakened area (30).

15. Sealing joint (11) intended to be mounted and used in a pressure cooker with manhole, comprising a cooking chamber (1), with an oval opening bordered by a re-entrant rim (4) in which an oval lid (10) is able to be inserted, defining a small diameter (d) and a large diameter (D), in order to hermetically close the chamber (1) by means of a sealing joint (11) which is mounted in a substantially peripheral groove (12) in the lid (10) forming a rolled edge (13) and defining an internal face (13A) and an external face (13B), the said joint thus coming into sealed abutment against the re-entrant rim (4), **characterised in that**, substantially in the area (S) corresponding to the large diameter (D) of the lid (10), the groove (12) comprises creep means (20, 21) for the joint (11), and **in that** the joint (11), the re-entrant rim (4) and the lid (10) are formed so that, in the event of overpressure, the lid (10) being in a position of abutment against the re-entrant rim (4) through the periphery of the rolled edge (13), the joint (11) creeps locally through the creep means (20, 21) in a centripetal manner under the effect of the pressure acting through the creep means in order to break the seal locally and allow the steam to escape between the re-entrant rim (4) and the lid (10).
